# EUROPEAN PATENT SPECIFICATION

(11) **EP 2 746 921 B1**
(45) Date of publication and mention of the grant of the patent: **22.08.2018**
(21) Application number: 13186596.6
(22) Date of filing: 30.09.2013
(51) Int. Cl.: G06F 3/0488, G06F 21/31, G06F 21/74, G06F 21/82, G06F 3/0486, G06F 21/62, G06F 3/0481

(54) **Method for managing per-application security level and an electronic device thereof**
Verfahren zur Verwaltung der Sicherheit per-Anwendung und elektronische Vorrichtung dafür
Procédé de gestion de sécurité par application et dispositif électronique associé

(30) Priority: 24.12.2012 KR 20120152352
(43) Date of publication of application: 25.06.2014
(73) Proprietor: Samsung Electronics Co., Ltd., Gyeonggi-do 443-742 (KR)
(72) Inventor: Park, Ji-Hyun, Gyeonggi-do (KR); Namgoong, Bo-Ram, Seoul (KR); Roh, Byoung-Tack, Gyeonggi-do (KR); Lee, Young-Jin, Gyeonggi-do (KR); Choi, Bo-Kun, Seoul (KR)
(74) Representative: HGF Limited

(56) References cited:
- EP-A2- 2 424 200
- WO-A2-2012/088474
- US-A1- 2010 024 028
- US-A1- 2011 145 833
- US-A1- 2012 214 442
- Fraunhofer SIT: "BizzTrust Demo", , 13 February 2012 (2012-02-13), page 1, XP054975314, Retrieved from the Internet: URL:http://www.youtube.com/watch?v=xZ3Wa6- aLSU [retrieved on 2014-02-11]
- Stefan Kirchner: "BizzTrust: Die Android-Killer-App für Unternehmen", www.go2android.de, 2 October 2011 (2011-10-02), XP055101824, Retrieved from the Internet: URL:http://www.go2android.de/bizztrust-die -android-killer-app-fur-unternehmen/ [retrieved on 2014-02-12]
- SVEN BUGIEL ET AL: "Practical and lightweight domain isolation on Android", SECURITY AND PRIVACY IN SMARTPHONES AND MOBILE DEVICES, ACM, 2 PENN PLAZA, SUITE 701 NEW YORK NY 10121-0701 USA, 17 October 2011 (2011-10-17), pages 51-62, XP058005980, DOI: 10.1145/2046614.2046624 ISBN: 978-1-4503-1000-0

## Description

### TECHNICAL FIELD

The present disclosure relates to security management of applications in an electronic device.

### BACKGROUND

An electronic device adopting a touch-screen panel such as smart phone turns off its screen when a certain time passes, in order to prevent an intended touch input and battery consumption caused by unnecessary screen display and to ensure security. To use the electronic device again, a user needs to unlock the screen in a particular manner.

The screen can be unlocked in various fashions such as dragging, touch motion, face recognition, voice recognition, swipe pattern, Personal Identification Number (PIN), or a password based on a security level. The electronic device typically allows no function unless the screen is unlocked. That is, the screen lock disables the whole electronic device regardless of whether an application is used frequently or is a low-security function.

After unlocking the screen, the screen may again turn off and lock after a certain time passes, even though the user is still using the electronic device. To use the electronic device again, the user needs to unlock the screen. When the security function of the screen lock is removed to reduce the occurrence of repeated screen unlocking, the electronic device's security is compromised. That is, the security and the convenience are contradictory.

In one possible solution, the user could adjust the security level in some cases. That is, the user could deactivate the security function when frequently using the electronic device, and activate the security function when not frequently using the electronic device. However, changing the security level would require complicated manipulation and setup of the electronic device. As a result, there is a greater inconvenience for the user who wants to flexibly change the security level of the electronic device according to an application use pattern.

US-2011/145833-A1 discloses methods and systems to perform displaying, on a handheld device, multiple icons associated with multiple segments; receiving first user input indicating a first segment of the multiple segments; executing a first virtual machine associated with the first segment on the handheld device; executing a first application on the first virtual machine; receiving second user input indicating a second segment of the multiple segments; executing a second virtual machine associated with the second segment on the handheld device; and executing a second application on the second virtual machine. This may further comprise before executing the second virtual machine, receiving authentication information and determining that the user is authenticated. The authentication information can include at least one of a user name, a password, and/or biometric information.

Fraunhofer SIT: "BizzTrust Demo", 13 February 2012, page 1, http://www.youtube.com/watch?v=xZ3Wa6-aLSU discloses a method of isolating business data from personal data within a single electronic device. A home screen has two icons: the first icon opens a business portion of the user interface and the second icon opens a personal portion of the user interface.

The above information is presented as background information only to assist with an understanding of the present disclosure. No determination has been made, and no assertion is made, as to whether any of the above might be applicable as prior art with regard to the present disclosure.

### SUMMARY

It is an aim of certain embodiments of the present invention to provide an apparatus and a method for easily changing a security level in an electronic device.

Another aim of certain embodiments of the present invention is to provide an apparatus and a method for differently setting a security level per application in an electronic device.

Yet another aim of certain embodiments of the present invention is to provide an apparatus and a method for providing a security region and a non-security region in an electronic device.

In accordance with a first aspect of the present invention there is provided a method for operating an electronic device, the method comprising: displaying a lock interface comprising a first region having a first security level and a second region having a second security level, wherein the first region and the second region each include at least one icon; when a first input is detected on an icon displayed in the first region: displaying an interface for releasing a lock of the electronic device; when the lock is released, executing an application corresponding to the icon displayed in the first region; and when the application corresponding to the icon displayed in the first region is exited, displaying the main menu; when a second input is detected on an icon displayed in the second region: executing an application corresponding to the icon displayed in the second region; and when the application corresponding to the icon displayed in second region is exited, displaying the lock interface comprising the first region and the second region; and when a third input is detected on a portion of the first region where no icon is displayed, displaying the interface for releasing a lock of the electronic device, and when the lock is released, displaying a main menu through which applications having either security level can be executed without requiring lock release.

In accordance with a second aspect of the present invention there is provided an electronic device comprising: a display; a memory; and at least one processor configured to: control the display to display a lock interface comprising a first region having a first security level and a second region having a second security level, wherein the first region and the second region each include at least one icon; when a first input is detected on an icon displayed in the first region: control the display to display an interface for releasing a lock of the electronic device: when the lock is released, execute an application corresponding to the icon displayed in the first region; and when the application corresponding to the icon displayed in the first region is exited, control the display to display the main menu; when a second input is detected on an icon displayed in the second region; execute an application corresponding to the icon displayed in the second region; and when the application corresponding to the icon displayed in second region is exited, control the display to display the lock interface comprising the first region and the second region; and when a third input is detected on a portion of the first region where no icon is displayed, control the display to display the interface for releasing a lock of the electronic device, and when the lock is released, control the display to display a main menu through which applications having either security level can be executed without requiring lock release.

Other aspects, advantages, and salient features of the disclosure will become apparent to those skilled in the art from the following detailed description, which, taken in conjunction with the annexed drawings, discloses various embodiments of the present disclosure. The present invention is defined by the appended claims.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A, 1B, 1C, and 1D illustrate a security region and a non-security region divided in an electronic device according to an embodiment of the present disclosure;
FIG. 2 illustrates a lock interface divided into a security region and a non-security region divided in an electronic device according to an embodiment of the present disclosure;
FIGS. 3A and 3B illustrate a method for executing an application in a non-security region in an electronic device according to an embodiment of the present disclosure;
FIGS. 4A, 4B, and 4C illustrate a method for executing an application in a security region in an electronic device according to an embodiment of the present disclosure;
FIGS. 5A, 5B, and 5C illustrate movements of the application from the security region to the non-security region in the electronic device according to an embodiment of the present disclosure;
FIGS. 6A and 6B illustrate movements of an application from a non-security region to a security region in an electronic device according to an embodiment of the present disclosure;
FIGS. 7A, 7B, and 7C illustrate a main menu entrance in an electronic device according to an embodiment of the present disclosure;
FIGS. 8A, 8B, 8C, and 8D illustrate a main menu entrance in an electronic device according to another embodiment of the present disclosure;
FIG. 9 illustrates a method for setting a security mode in an electronic device according to an embodiment of the present disclosure;
FIG. 10 illustrates a method for displaying a lock interface in a smart access lock mode in the electronic device according to an embodiment of the present disclosure;
FIG. 11 illustrates a method for executing a non-security application in a smart access lock mode in an electronic device according to an embodiment of the present disclosure;
FIG. 12 illustrates a method for executing a security application in a smart access lock mode in an electronic device according to an embodiment of the present disclosure;
FIG. 13 illustrates a method for moving an icon from a security region to a non-security region in a smart access lock mode in an electronic device according to an embodiment of the present disclosure;
FIG. 14 illustrates a method for moving an icon from a non-security region to a security region in a smart access lock mode in an electronic device according to an embodiment of the present disclosure;
FIG. 15 illustrates an electronic device according to an embodiment of the present disclosure; and
FIG. 16 illustrates an electronic device according to another embodiment of the present disclosure.

Throughout the drawings, like reference numerals will be understood to refer to like parts, components and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Various embodiments of the present disclosure provide a technique for managing security of applications in an electronic device. The present disclosure relates to variable security levels based on application use patterns. As multiple functions continue to converge into one electronic device such as smart phone, the number of applications installed on one device is considerable. However, the applications that are most frequently used by a user are limited. Those applications frequently used may be given low security or high security; however, it is difficult to flexibly change a security function applied to the whole electronic device, per application. The present disclosure provides a technique for applying a security function to the device and flexibly adjusting a security level using a simple manipulation according to a use pattern of the applications frequently used.

Those of ordinary skill in the art will understand that an "electronic device" contemplates a portable electronic device such as smart phone, portable terminal, mobile phone, mobile pad, media player, tablet computer, handheld computer, or Personal Digital Assistant (PDA). The electronic device may be a device combining two or more functions of those devices. Of course, the "electronic device" may also contemplate future generations of like devices.

Significant problems contemplated by embodiments of the present disclosure include instances where maximizing security and convenience are at odds.

For example, to use the electronic device of the activated security function, a user turns on a screen by pressing a hard key and releases the lock. The user plays a music file (e.g., MP3). To use the electronic device again after some time, the user needs to release the lock again.

In another example, to use the electronic device of the activated security function, the user turns on the screen by pressing the hard key and releases the lock. When sending a message and receiving a reply through a chatting program, the user needs to release the lock to see the reply. In addition, to send a reply, the user needs to release the lock again.

In still another example, to use the electronic device of the activated security function, the user may turn on the screen by pressing the hard key and releases the lock. When the user accesses the Internet and then enters a shadow area (e.g., elevator), the access is disconnected. Next, to open an Internet page out of the shadow area, the user needs to release the lock again.

In yet another example, the user creates a memo in a memo application to be used in a few minutes. Next, every time the user wants to see the memo, he/she needs to release the lock.

In another example, the user makes a note using the electronic device during class. Every time the user wants to make a note in the middle of the class, he/she needs to release the lock.

As such, the present disclosure provides the security management method for addressing the problem of maintaining both security and convenience.

Various embodiments consistent with the present disclosure are directed at an electronic device having its screen divided into a security region and a non-security region. The security region occupies part of the screen, and the non-security region occupies another part of the screen. That is, the security region and the non-security region do not overlap with each other.

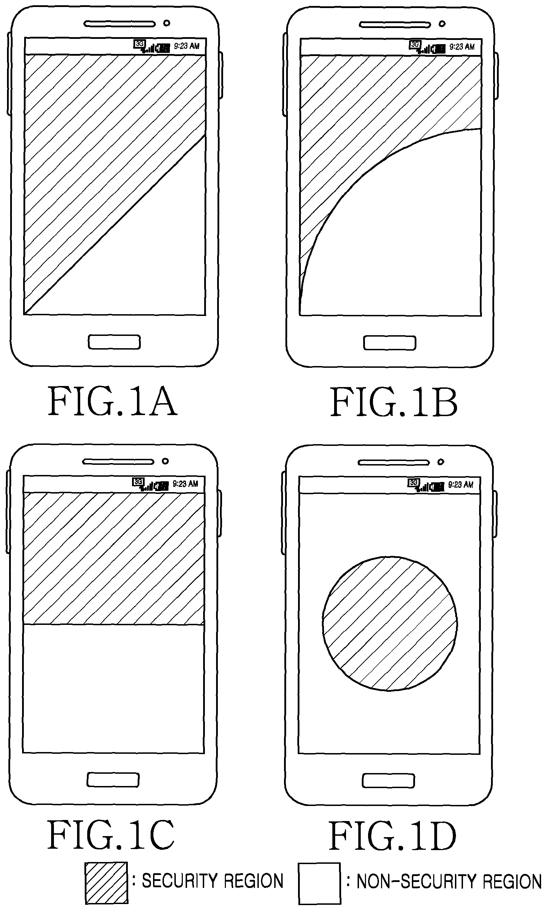

FIGS. 1A to 1D depict the security region and the non-security region divided in the electronic device according to an embodiment of the present disclosure.

Referring to FIG. 1A, the security region and the non-security region can be divided by a diagonal. A boundary line between the security region and the non-security region can be a curve as shown in FIG. 1B. The security region and the non-security region can be divided vertically as shown in FIG. 1C. The security region can be allocated inside a particular figure and the non-security region can be allocated outside the figure as shown in FIG. 1D. For purposes of simplicity of explanation, it is assumed that the screen is divided as shown in FIG. 1A.

As above, the security region and the non-security region can be divided according to an infinite setup, a user's touch screen or a user's touch screen use pattern analysis. For example, the regions can be divided in a predesigned pattern of the electronic device. For example, the electronic device can suggest a plurality of predesigned division patterns in a setup menu to determine a division pattern to apply according to a user's selection. Based on the touch screen use pattern analysis, the electronic device can allocate a screen region mostly used by the user as the non-security region. The screen region mostly used can be identified based on touch input distribution and touch count statistics.

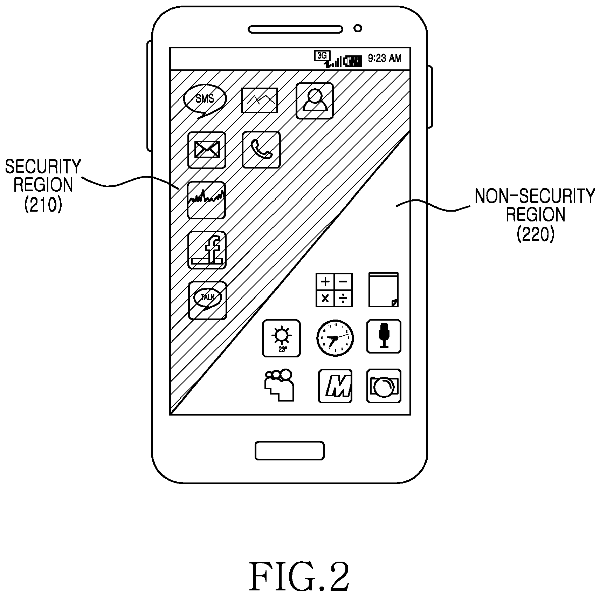

A lock interface including the security region and the non-security region is displayed when the screen is turned on by pressing the hard key. The lock interface including the security region and the non-security region is shown in FIG. 2. FIG. 2 depicts the lock interface divided to the security region and the non-security region in the electronic device according to an embodiment of the present disclosure. Referring to FIG. 2, the security region 210 displays icons of applications requiring the lock release for their execution, and the non-security region 220 displays icons of applications not requiring the lock release. For purposes of simplicity, the application requiring the lock release for its execution will be referred to as a "security application," and the application not requiring the lock release for its execution will be referred to as a "non-security application," and the icon requiring the lock release for its execution will be referred to as a "security icon," and the icon not requiring the lock release for its execution will be referred to as "a non-security icon."

When the security function is deactivated and the screen is turned on by pressing the hard key, a main menu can be displayed instead of the lock interface including the security region and the non-security region. Even when the security function is activated, the lock interface of FIG. 2 or a lock interface can be selectively displayed according to user's setup. To distinguish from a mode for displaying a different lock interface, a mode of the present disclosure is referred to as a "smart access lock mode."

The lock interface of FIG. 2 can be represented after the security icon and the non-security icon are classified. The security icon and the non-security icon can be classified according to the user's setup. That is, the electronic device can provide an interface for setting the security/non-security for each application, and the user can set the security/non-security for each application using the interface. For example, the user can select the security or the non-security per application, or classify the applications based on a certain conditional expression. For example, the conditional expression can use at least one of the use frequency of the application or the use of user contents (e.g., photo).

When the security region and the non-security region are divided as above, the application is executed as follows.

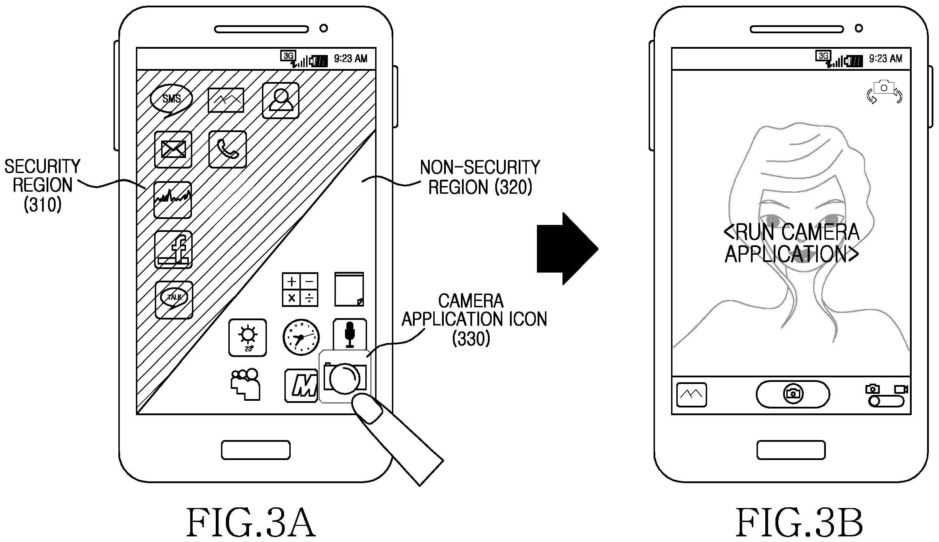

FIGS. 3A and 3B depict a method for executing an application in a non-security region in an electronic device according to an embodiment of the present disclosure. In FIGS. 3A and 3B, it is assumed that a camera application is classified to the non-security application.

Referring to FIG. 3A, the electronic device divides the screen to a security region 310 and a non-security region 320, and the non-security region 320 includes a camera application icon 330. The user touches (presses and releases) the camera application icon 330 as shown in FIG. 3A. Thus, the electronic device executes the camera application without a separate process as shown in FIG. 3B.

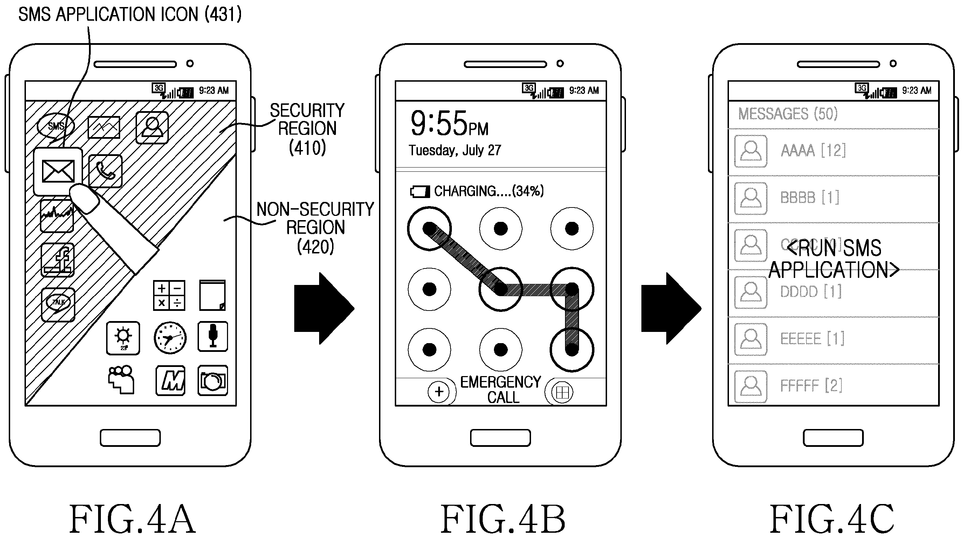

FIGS. 4A to 4C depict application execution in a security region of an electronic device according to an embodiment of the present disclosure. In FIGS. 4A to 4C, it is assumed that a Short Message Service (SMS) application is classified to the security application.

Referring to FIG. 4A, the electronic device divides the screen to a security region 410 and a non-security region 420, and the security region 410 includes an SMS application icon 431. The user touches (presses and releases) the SMS application icon 431 as shown in FIG. 3A. Hence, the electronic device displays an interface requiring to unlock the screen as shown in FIG. 4B. The screen unlock of FIG. 4B conforms to the pattern input style. Next, when the user releases the lock, the electronic device executes the SMS application as shown in FIG. 4C. Thus, in order to execute the application through the icon in the security region, the lock release is required as shown in FIG. 4C.

As such, the icons of the applications belong to the security region or the non-security region according to the set security/non-security. Accordingly, when a particular security application is temporarily changed to the non-security application for a certain time, two switches between the security and the non-security are required before and after the use in a security setup menu. To address this issue, the electronic device supports a temporary region movement. The temporary region movement is described now.

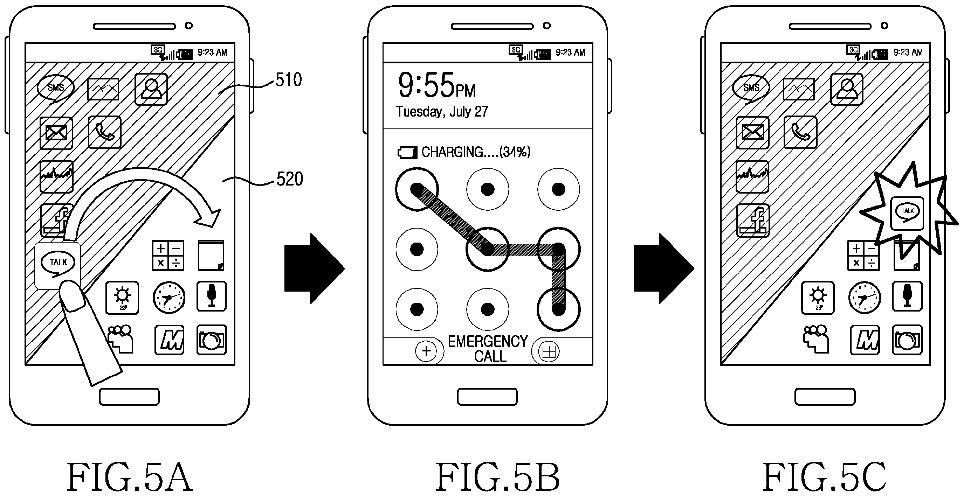

FIGS. 5A to 5C depict movement of an application from a security region to a non-security region in an electronic device according to an embodiment of the present disclosure.

Referring to FIG. 5A, the user moves (drags and drops) one of the security icons in a security region 510 to a non-security region 520 as shown in FIG. 5A. Hence, the electronic device displays an interface requiring the lock release as shown in FIG. 5B. The lock release of FIG. 5B conforms to a pattern input style. Next, when the user unlocks the screen, the electronic device includes the icon moved by the user into the non-security region 520 as shown in FIG. 5C. While the icon stays in the non-security region 520, the electronic device manages the application corresponding to the icon as the non-security application. That is, to move the icon from the security region 510 and the non-security region 520, the lock release is required as shown in FIG. 5C.

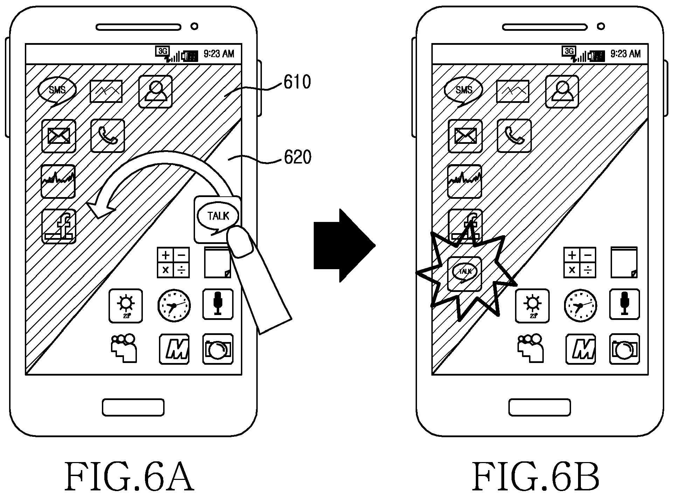

FIGS. 6A and 6B depict movement of an application from a non-security region to a security region in an electronic device according to an embodiment of the present disclosure.

Referring to FIGS. 6A and 6B, the user moves (drags and drops) one of the security icons in a non-security region 620 to a security region 610 as shown in FIG. 6A. Hence, the electronic device includes the icon moved by the user into the security region 610 as shown in FIG. 6B. While the icon stays in the security region 610, the electronic device manages the application corresponding to the icon as the security application. That is, to move the icon from the non-security region 620 and the security region 610, the lock release is not required unlike FIG. 4A. The process of FIG. 6A can be equally applied to move the icon, which is initially in the security region 610 but moved to the non-security region 620 according to a user's command, back to the security region 610.

The temporary region movement of the icon is possible as shown in FIGS. 5A to 6B. The icon movement of FIGS. 5A to 6B are temporary and not fixed after the movement. Thus, the icon temporarily moved by the user can be managed as follows. When the application corresponding to the moved icon is executed once and terminated, the electronic device can put the icon back into the original region. Alternatively, when the icon is moved and a preset time passes, the electronic device can put the icon back into the original region. Alternatively, the electronic device can determine the security or the non-security of the application corresponding to the icon according to an analysis result of the device status or the ongoing application, and reallocate the icon according to the determination.

The necessity to manage the icon after the temporary region movement grows when the icon is moved from the security region to the non-security region. When the icon in the non-security region is moved to the security-region, the security is not affected. Accordingly, the icon management after the temporary region movement can be applied only when the icon is moved from the security region to the non-security region. Yet, the icon management after the temporary region movement can be applied regardless of a temporary region movement direction.

An application can combine a plurality of functions. For example, a chatting application can include a photo reading and sending application as a sub-application. It may be important to determine whether to manage the security based on the higher (upper level) application or the lower application.

When the security levels of the higher application and the lower application are different, various embodiments consistent with the present disclosure manage the security as differently. When the higher application is executed without the lock release in the non-security region and the lower application is executed in the security region, the electronic device requires the lock release. By contrast, when the higher application is executed after the lock release in the security region, the electronic device executes the lower application in the security region without the lock release because the user is already authorized to use it. Further, when the lower application is in the non-security region, the electronic device executes the lower application regardless of the lock release.

Alternatively, the security level of the lower application can depend on the security level of the higher application. That is, when the higher application is in the non-security region, the lower application can be executed without the lock release regardless of the security level of the lower application.

When the smart access lock mode is entered and the hard key is pressed with the screen turned off, the lock interface including the security region and the non-security region is displayed. Hence, it is necessary to enter the main menu.

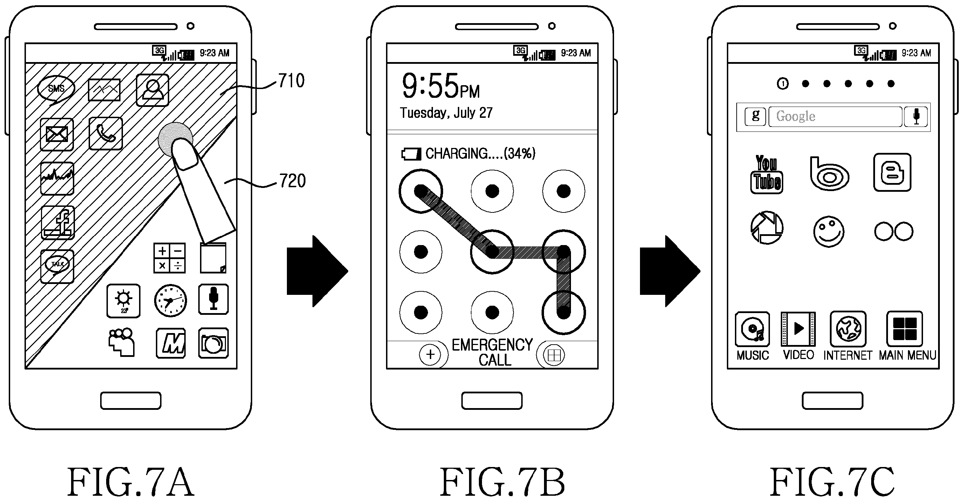

FIGS. 7A to 7C depict an entrance to a main menu in an electronic device according to an embodiment of the present disclosure.

Referring to FIG. 7A, the electronic device divides the interface to a security region 710 and a non-security region 720. The user touches an empty space including no icon in the security region 710 as shown in FIG. 7A, and the electronic device recognizes the touch input as a main menu enter command. Therefore, the electronic device displays the interface requiring the lock release as shown in FIG. 7B. The lock release of FIG. 7B conforms to a pattern input style. Next, when the user releases the lock, the electronic device displays the main menu as shown in FIG. 7C.

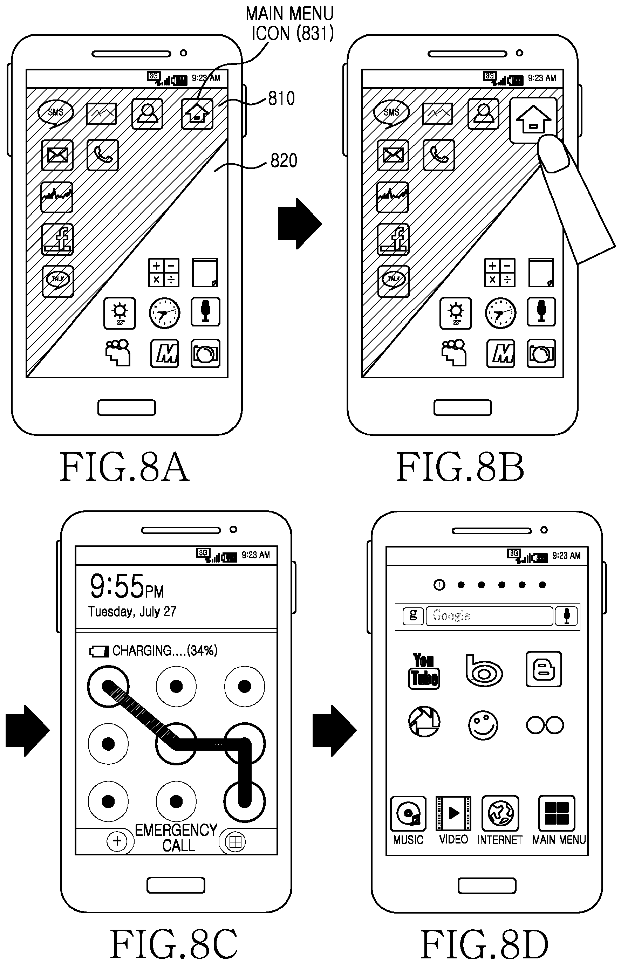

FIGS. 8A to 8D depict an entrance to a main menu in an electronic device according to another embodiment of the present disclosure.

Referring to FIGS. 8A and 8B, the electronic device divides the interface to a security region 810 and a non-security region 820, and displays a main menu icon 831 in the security region 810 as shown in FIG. 8A. The user touches the main menu icon 831 in the security region 810 as shown in FIG. 8B, and the electronic device recognizes the touch input as the main menu enter command. Hence, the electronic device displays the interface requiring the lock release as shown in FIG. 8C. The lock release of FIG. 8C conforms to a pattern input style. Next, when the user releases the lock, the electronic device displays the main menu as shown in FIG. 8D.

Now, operations and structure of the electronic device for managing the security as state above are elucidated by referring to the drawings.

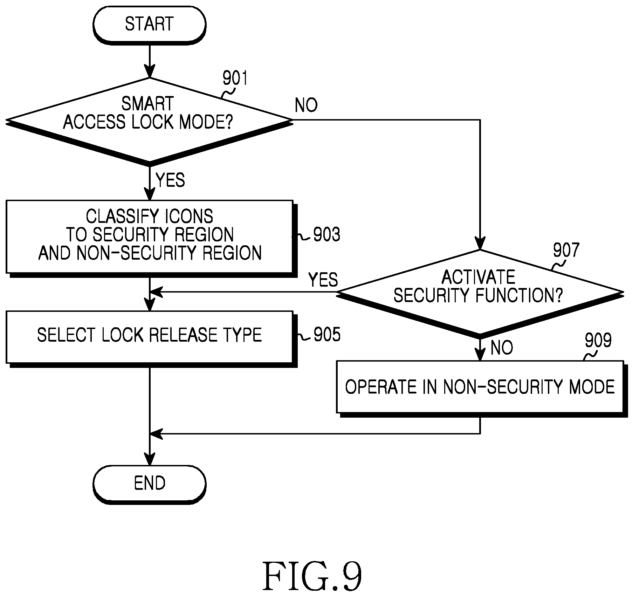

FIG. 9 depicts a method for setting a security mode in an electronic device according to an embodiment of the present disclosure.

Referring to FIG. 9, the electronic device determines whether it is in the smart access lock mode in operation 901. That is, the electronic device supports the smart access lock mode and concurrently supports other security management systems consistent with embodiments of the present disclosure.

In the smart access lock mode, the electronic device classifies the icons for the security region and the non-security region in operation 903. The security region and the non-security region are classified according to the setup, and the setup can be determined by the user's selection or certain conditional expressions.

In operation 905, the electronic device selects the lock release type. That is, the electronic device can support a plurality of lock release types. For example, the lock release types can include the drag, the motion, the face recognition, the voice recognition, the pattern, the PIN, and the password. The electronic device supports the lock release type according to the user's selection. Notably, when the electronic device supports only one lock release type, operation 905 can be omitted.

Out of the smart access lock mode in operation 901, the electronic device determines whether the security function is activated in operation 907. That is, the electronic device determines to conform to a different security management system and whether to activate the security function.

When the security function is not activated, the electronic device operates in a non-security mode in operation 909. That is, the electronic device allows execution of every application without the lock release. Namely, the electronic device operates without the lock interface. By contrast, when the security function is activated, the electronic device selects a lock release type in operation 905 and requires the lock release for every application execution.

The method described above in relation with FIG. 9 under of the present disclosure may be provided as one or more instructions in one or more software modules, or computer programs stored in an electronic device including a portable terminal.

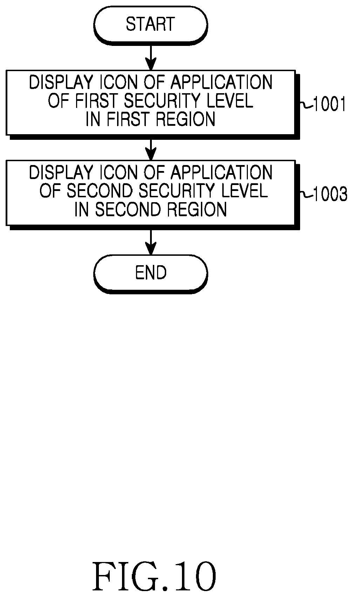

FIG. 10 depicts a method for displaying a lock interface in a smart access lock mode in an electronic device according to an embodiment of the present disclosure.

Referring to FIG. 10, an electronic device displays an icon of an application of a first security level in a first region in operation 1001. Herein, the first level indicates a security level requiring the lock release for the execution. The first region indicates the security region and occupies part of the interface.

In operation 1003, an electronic device displays an icon of an application of a second security level in a second region. The second level indicates a security level requiring no lock release for the execution. The second region indicates the non-security region and occupies the exclusive part of the first region.

The method described above in relation with FIG. 10 under of the present disclosure may be provided as one or more instructions in one or more software modules, or computer programs stored in an electronic device including a portable terminal.

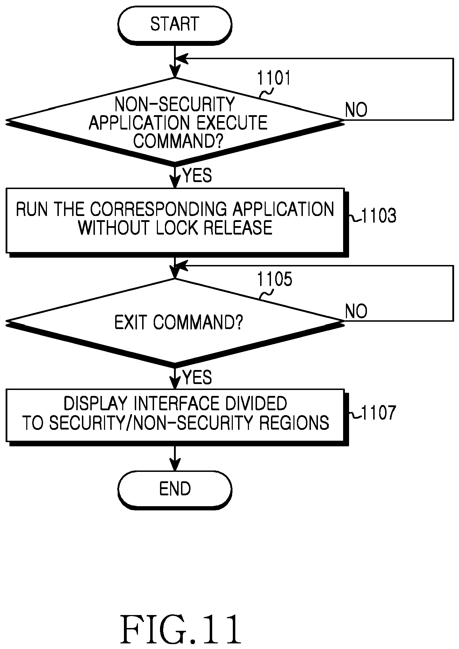

FIG. 11 depicts a method for executing a non-security application in a smart access lock mode in the electronic device according to an embodiment of the present disclosure.

Referring to FIG. 11, the electronic device determines whether a non-security application execute command is generated in operation 1101. By displaying the lock interface including the security region and the non-security region, the electronic device may determine whether to generate the execute command of the application corresponding to the icon in the non-security region. The execute command can include the press-and-release of the corresponding icon. For example, the lock interface divided into the security region and the non-security region is shown in FIG. 2.

When the non-security application execute command is generated, the electronic device runs the corresponding application without the lock release in operation 1103. That is, the electronic device executes the application corresponding to the pressed-and-released icon. In so doing, the electronic device does not require the lock release.

In operation 1105, the electronic device determines whether an application exit command takes place. For example, the exit command can be a back button or a home button.

When the exit command is entered, the electronic device displays the interface divided into the security region and the non-security region in operation 1107. That is, the electronic device returns to the status before the execute command of the non-security application at operation 1101. Alternatively, the electronic device can display the interface requiring the lock release. When the lock is released, the electronic device can display the main menu.

The method described above in relation with FIG. 11 under of the present disclosure may be provided as one or more instructions in one or more software modules, or computer programs stored in an electronic device including a portable terminal.

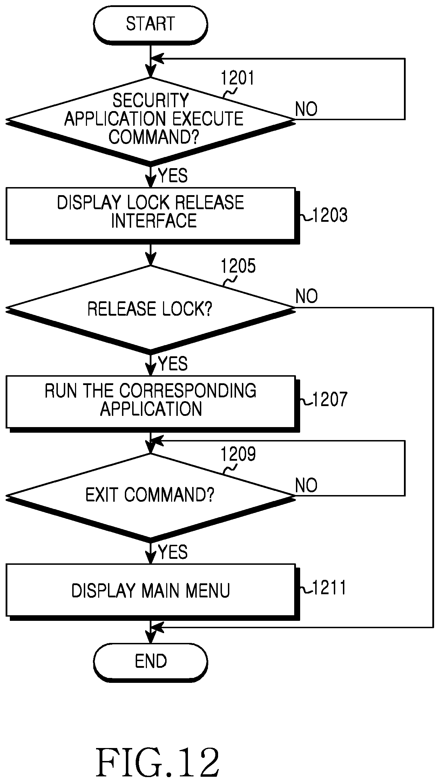

FIG. 12 depicts a method for executing a security application in a smart access lock mode in an electronic device according to an embodiment of the present disclosure.

Referring to FIG. 12, the electronic device determines whether a security application execute command is entered in operation 1201. That is, as displaying the interface including the security region and the non-security region, the electronic device determines whether the execute command of the application corresponding to the icon in the security region is entered. The execute command can include the press-and-release of the corresponding icon. For example, the lock interface divided into the security region and the non-security region is shown in FIG. 2.

When the security application execute command is entered, the electronic device displays the interface requiring the lock release in operation 1203. That is, before executing the application corresponding to the pressed-and-released icon, the electronic device requires the lock release. For example, the interface requiring the lock release is shown in FIG. 4B.

In operation 1205, the electronic device determines whether the lock is released. For example, in case of the PIN input or the password input, the electronic device determines whether the correct PIN or password is input. As for the pattern input, the electronic device determines whether the same pattern as a preset pattern is input. The determination of the lock release can vary according to the lock release type.

When the lock is released, the electronic device executes the corresponding application in operation 1207. That is, the electronic device executes the application corresponding to the pressed-and-released icon.

In operation 1209, the electronic device determines whether an application exit command is entered. For example, the execute command can press the back button or the home button.

When the exit command executes, the electronic device displays the main menu in operation 1211. To confirm the lock release and the use authority in operation 1205, the electronic device displays the main interface. Alternatively, the electronic device can display the lock interface divided into the security region and the non-security region. That is, the electronic device can return to the status before the execute command of the security application at operation 1201.

The method described above in relation with FIG. 12 under of the present disclosure may be provided as one or more instructions in one or more software modules, or computer programs stored in an electronic device including a portable terminal.

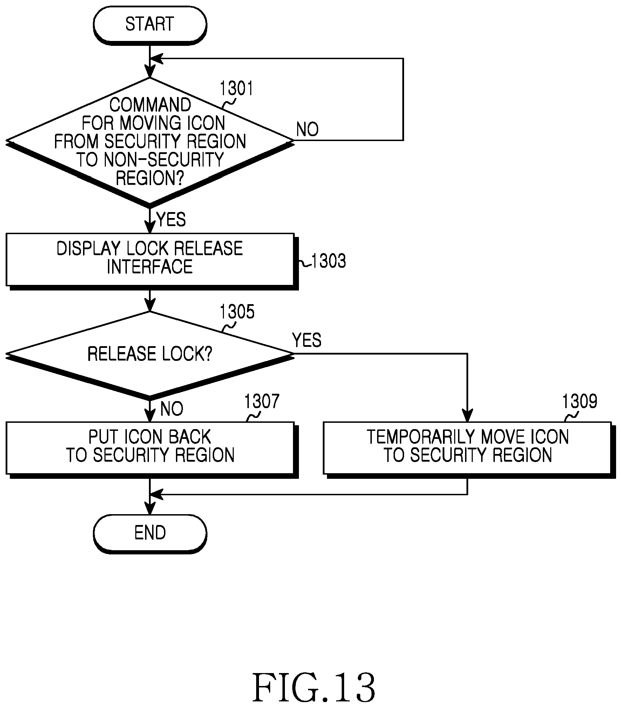

FIG. 13 illustrates a method for moving an icon from a security region to a non-security region in a smart access lock mode in an electronic device according to an embodiment of the present disclosure.

Referring to FIG. 13, the electronic device determines whether a command for moving the icon from the security region to the non-security region is executed in operation 1301. That is, as displaying the lock interface divided into the security region and the non-security region, the electronic device determines whether a move command of the icon of the security region is made. The icon move command can include the drag-and-drop of the corresponding icon. For example, the lock interface divided into the security region and the non-security region is shown in FIG. 2.

When the command for moving the icon from the security region to the non-security region is executed, the electronic device displays the interface requiring the lock release in operation 1303. That is, before executing the application corresponding to the pressed-and-released icon, the electronic device requires the lock release. For example, the interface requiring the lock release is shown in FIG. 5B.

In operation 1305, the electronic device determines whether the lock is released. For example, as for a PIN input or a password input, the electronic device determines whether a correct PIN or password is input. As for the pattern input, the electronic device determines whether the same pattern as a preset pattern is input. The determination of the lock release can vary according to the lock release type.

When the lock is not released, that is, when the user's input does not match a preset password or pattern, the electronic device puts the icon back into the security region in operation 1307. Thus, the application corresponding to the icon is managed as the security application and requires the lock release for its execution.

When the lock is released, that is, when the user's input matches a preset password or pattern, the electronic device temporarily moves the icon to the non-security region in operation 1309. Thus, the application corresponding to the icon is managed as the non-security application and requires no lock release for its execution.

Although it is not depicted in FIG. 13, the icon temporarily moved in operation 1309 can return to the security region according to a certain condition without another user's move command. For example, when the application corresponding to the moved icon is executed one time and then terminated, when a preset time is passed after the icon is moved, and when the electronic device determines to manage the application corresponding to the icon as the security application according to the analysis result of the electronic device status or the ongoing application, the icon returns to the security region.

The method described above in relation with FIG. 13 under of the present disclosure may be provided as one or more instructions in one or more software modules, or computer programs stored in an electronic device including a portable terminal.

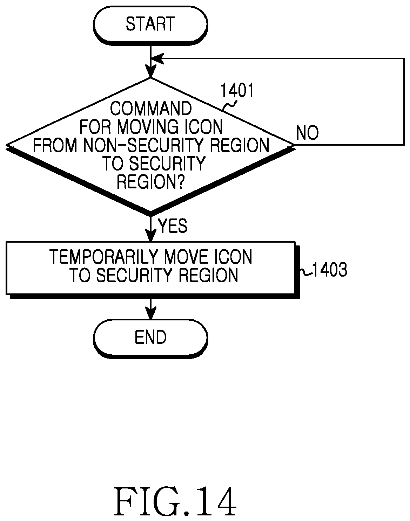

FIG. 14 illustrates a method for moving the icon from the non-security region to the security region in the smart access lock mode in the electronic device according to an embodiment of the present disclosure.

Referring to FIG. 14, the electronic device determines whether a command for moving the icon from the non-security region to the security region is made in operation 1401. That is, as displaying the lock interface divided into the security region and the non-security region, the electronic device determines whether the move command of the icon of the non-security region is executed. The icon move command can include the drag-and-drop of the corresponding icon. For example, the lock interface divided into the security region and the non-security region is shown in FIG. 2.

When the command for moving the icon from the non-security region to the security region is generated, the electronic device temporarily moves the icon to the security region in operation 1403. In so doing, the electronic device does not require the lock release. Thus, the application corresponding to the icon is managed as the security application and requires no lock release for its execution.

Although it is not depicted in FIG. 14, the icon temporarily moved in operation 1403 can return to the non-security region according to a certain condition without another user's move command. For example, when the application corresponding to the moved icon is executed one time and then terminated, when a preset time is passed after the icon is moved, and when the electronic device manages the application corresponding to the icon as the non-security application according to the analysis result of the electronic device status or the ongoing application, the icon returns to the non-security region.

The method described above in relation with FIG. 14 under of the present disclosure may be provided as one or more instructions in one or more software modules, or computer programs stored in an electronic device including a portable terminal.

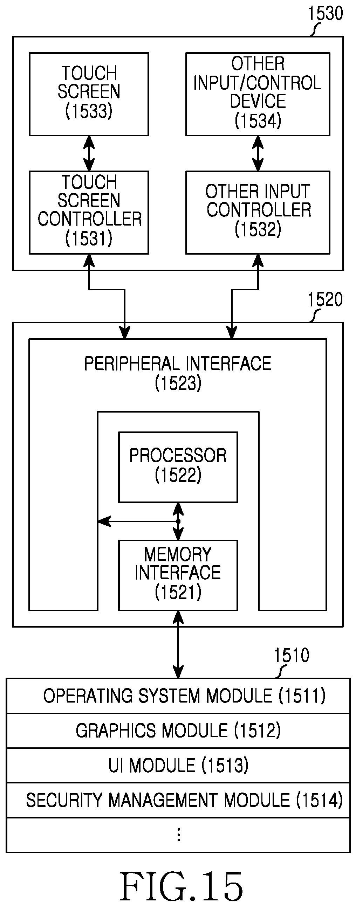

FIG. 15 is a block diagram of the electronic device according to an embodiment of the present disclosure. The present disclosure may be implemented in an electronic device including a portable terminal such as, for example, a smart phone and a mobile telecommunication terminal. Hereunder, a portable terminal is used as an example for the electronic device.

Referring to FIG. 15, the electronic device includes a memory 1510, a processor unit 1520, and an Input Output (IO) system 1530. A plurality of memories 1510 can be equipped. The components of the electronic device of FIG. 15 can be coupled by at least one communication bus (not shown) or stream line (not shown).

The memory 1510 can be connected to a memory interface 1521. The memory 1510 may include at least one of a fast Random Access Memory (RAM) or a non-volatile memory, at least one optical storage, and a flash memory (e.g., NAND and NOR). The memory 1510 stores at least one software component. Software components may include an operating system module 1511, a graphics module 1512, a User Interface (UI) module 1513, and a security management module 1514. The module being the software component can be represented as a set of instructions, and may be referred to as an instruction set or a program.

The operating system module 1511 may include at least one software component for controlling general system operations. For example, an operating system module 1511 can be an embedded operating system such as WINDOWS, LINUX, Darwin, RTXC, UNIX, OS X, and VxWorks. For example, the general system operation control includes memory management and control, storage hardware control and management, and power control and management. The operating system module 1511 may enable communication between at least one hardware component and at least one software component. The graphics module 1512 includes at least one software component for providing and displaying graphics on a touch screen 1533. Herein, the graphics may include a text, a web page, an icon, a digital image, a video, an animation, and so on. The UI module 1513 includes at least one software component relating to the UI. Data about the UI is involved in the status change of the UI and the condition of the UI status change.

The security management module 1514 includes at least one software component for managing the security per application. In other words, the security management module 1514 includes the software component for classifying the applications to the security application and the non-security application and selecting the lock release type. The security management module 1514 includes the software component for creating the lock interface divided into the security region and the non-security region, running the applications of the security region or the non-security region according to a user-defined or pre-programmed procedure, and moving the applications between the security region and the non-security region. For example, the security management module 1514 can operate the electronic device as shown in FIGS. 1A through 8D or include at least one software component for the methods of FIGS. 9 through 14. For example, the security management module 1514 includes at least one or more instructions for displaying the application icon of the security level requiring the lock release for the execution in the security region occupying part of the interface, and displaying the application icon of the security level requiring no lock release for the execution in the non-security region occupying the exclusive part of the security region.

The memory 1510 can include additional modules besides the above-stated modules 1511 and 1514. Alternatively, some of the modules 1511 through 1514 may be omitted.

The processor unit 1520 may include the memory interface 1521, a processor 1522, and a peripheral interface 1523. The processor 1522 may include at least one hardware chip. The processor unit 1520, in part or in whole, may be referred to as a processor. The memory interface 1521, the processor 1522, and the peripheral interface 1523 can be separate components or integrated into at least one integrated circuit.

The processor 1522 may control the electronic device to conduct the function corresponding to the software program by executing the software program, and processing and controlling voice communication and data communication. The processor 1522 may execute the software module stored in the memory 1510 and conduct particular functions corresponding to the modules. The processor 1522 enables the methods consistent with embodiments of the present disclosure that can be stored in the memory 1510. The processor 1522 can include at least one data processor and image processor. The data processor and the image processor can be separate or combined hardware. The processor 1522 can include a plurality of processors for different functions.

The peripheral interface 1523 interconnects the IO subsystem 1530 and at least one peripheral of the electronic device with the processor 1521 and the memory 1110. The memory 1510 can be connected through the memory interface 1521. That is, the memory interface 1521 provides an interface for accessing the memory 1510.

The IO subsystem 1530 can include a touch screen controller 1531, another input controller 1532, a touch screen 1533, and other input/control devices 1534. The touch screen controller 1531 may be coupled to the touch screen 1533. The touch screen 1533 and the touch screen controller 1531 can detect the contact, the motion, and the absence of motion using, but not limited to, capacitive, resistive, infrared and surface sound wave techniques for determining one or more contact points on the touch screen 1533 and a multi-touch detection technique including various proximity sensor arrays or other elements. The other input controller 1532 can be coupled to the other input/control devices 1534. The other input/control devices 1534 can include one or more up/down buttons for controlling the volume. The button can employ a push button, a rocker button, a rocker switch, a thumb wheel, a dial, a stick, or a pointer device such as stylus.

The touch screen 1533 provides the I/O interface between the electronic device and the user. That is, the touch screen 1533 forwards a user's touch input to the electronic device. The touch screen 1533 is a medium for showing the output of the electronic device to the user. Hence, the touch screen 1533 can be referred to as a display part. That is, the touch screen 1533 shows a visual output to the user. The visual output is represented as text, graphic, video, or a combination of thereof. The touch screen 1533 can employ various display means. For example, the touch screen 1533 may include at least one of, but is not limited to, a Liquid Crystal Display (LCD), a Light Emitting Diode (LED), a Light emitting Polymer Display (LPD), an Organic LED (OLED), an Active Matrix OLED (AMOLED) or a Flexible LED (FLED).

The various functions of the electronic device can be executed by hardware, software, or their combination including at least one stream processing and/or Application Specific Integrated Circuits (ASICs).

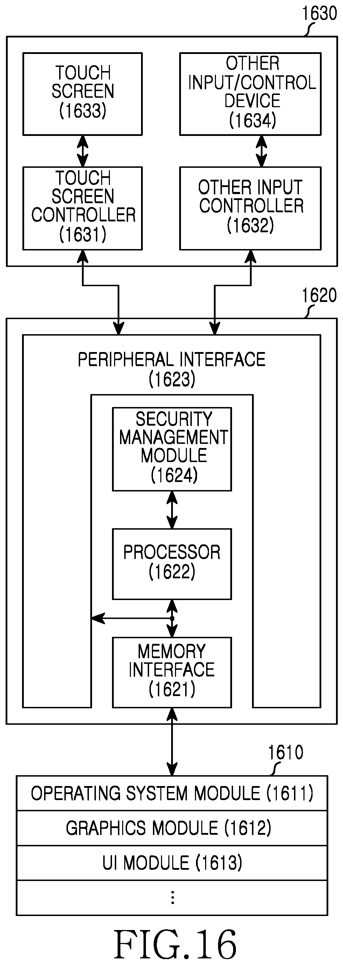

FIG. 16 is a block diagram of the electronic device according to another embodiment of the present disclosure. The present disclouse may be implemented in an electronic device including a portable terminal such as, for example, a smart phone and a mobile telecommunication terminal. Hereunder, a portable terminal is used as an example for the electronic device.

Referring to FIG. 16, the electronic device includes a memory 1610, a processor unit 1620, and an IO system 1630. A plurality of memories 1610 may be included. The components of the electronic device of FIG. 16 may be coupled by at least one communication bus (not shown) or stream line (not shown).

The memory 1610 may be connected to a memory interface 1621. The memory 1610 may include at least one of a fast random access memory such as a magnetic disc storage, a non-volatile memory, at least one optical storage, and a flash memory (e.g., NAND and NOR). The memory 1610 may store at least one software component. Software components may include an operating system module 1611, a graphics module 1612, and a UI module 1613. Thus, the module being the software component may be represented as a set of instructions, and may be referred to as the instruction set or the program.

The operating system module 1611 includes at least one software component for controlling the general system operations. For example, the operating system module 1611 can be an embedded operating system such as WINDOWS, LINUX, Darwin, RTXC, UNIX, OS X, and VxWorks. For example, the general system operation control includes memory management and control, storage hardware control and management, and power control and management. The operating system module 1611 enables normal communication between at least one hardware and at least one software component. The graphics module 1612 includes at least one software component for providing and displaying graphics on a touch screen 1633.The graphics may include a text, a web page, an icon, a digital image, a video, an animation, and so on. The UI module 1613 includes at least one software component relating to the UI. Data about the UI is involved in the status change of the UI and the condition of the UI status change.

The memory 1610 can include an additional module besides the above-stated modules 1611 through 1613. Alternatively, some of the modules 1611 through 1613 may be omitted.

The processor unit 1620 includes the memory interface 1621, a processor 1622, a peripheral interface 1623, and a security management processor 1624. The processor 1622 can include at least one hardware chip. The whole processor unit 1620 can be referred to as a processor. The memory interface 1621, the processor 1622, and the peripheral interface 1623 can be separate components or integrated onto at least one integrated circuit.

The processor 1622 controls the electronic device to conduct the function corresponding to the software program by running the software program, and processes and controls voice communication and data communication. The processor 1622 executes the software module stored in the memory 1610 and conducts a particular function corresponding to the module. That is, the processor 1622 fulfills the present method in association with the software modules stored in the memory 1610. The processor 1622 can include at least one data processor and image processor. The data processor and the image processor can be separate hardware. The processor 1622 can include a plurality of processors for different functions.

The peripheral interface 1623 interconnects the IO subsystem 1630 and at least one peripheral of the electronic device with the processor 1621 and the memory 1610. The memory 1610 can be connected through the memory interface 1621. That is, the memory interface 1621 provides an interface for accessing the memory 1610.

The security management processor 1624 manages the security per application. More specifically, the security management processor 1624 classifies the applications to the security application and the non-security application and selects the lock release type. The security management processor 1624 creates the lock interface divided to the security region and the non-security region, runs the applications of the security region or the non-security region according to a defined procedure, and moves the applications between the security region and the non-security region. For example, the security management processor 1624 controls the electronic device to operate as shown in FIGS. 1A through 8D or to carry out the methods of FIGS. 9 through 14. The security management processor 1624 can be combined with the processor 1622 or included as part of the processor 1622. For example, the security management processor 1624 controls to display the application icon of the security level requiring the lock release for the execution in the security region occupying part of the interface, and to display the application icon of the security level requiring no lock release for the execution in the non-security region occupying the exclusive part of the security region.

The IO subsystem 1630 can include a touch screen controller 1631, other input controller 1632, a touch screen 1633, and other input/control device 1634. The touch screen controller 1631 can be coupled to the touch screen 1633. The touch screen 1633 and the touch screen controller 1631 can detect the contact, the motion, or absence of motion, but not limited to, capacitive, resistive, infrared and surface sound wave techniques for determining one or more contact points on the touch screen 1633 and a multi-touch detection technique including various proximity sensor arrays or other elements. The other input controller 1632 can be coupled to the other input/control devices 1634. The other input/control devices 1634 can include at least one up/down button for controlling the volume. The button can employ a push button, a rocker button, a rocker switch, a thumb wheel, a dial, a stick, or a pointer device such as stylus.

The touch screen 1633 provides the I/O interface between the electronic device and the user. That is, the touch screen 1633 forwards a user's touch input to the electronic device. The touch screen 1633 is the medium for showing the output of the electronic device to the user. Accordingly, the touch screen 1633 can be referred as a display part. That is, the touch screen 1633 shows the visual output to the user. The visual output is represented as text, graphic, video, and a combination of them. The touch screen 1633 can employ various display means. For example, the touch screen 1633 can include at least one of, but not limited to, the LCD, the LED, the LPD, the OLED, the AMOLED or the FLED.

The various functions of the electronic device can be executed by hardware, software, or their combination including at least one stream processing and/or ASICs.

The methods as described in the claims and/or the specification of the present disclosure can be implemented using hardware, software, or a combination of them.

As for the software, a computer-readable storage medium containing one or more programs (software modules) can be provided. One or more programs stored in the computer-readable storage medium are configured for execution by one or more processors of the electronic device. One or more programs include instructions for controlling the electronic device to execute the methods according to the various embodiments as described in the claims and/or the specification of the present disclosure.

Such a program (software module, software) can be stored to a random access memory, a non-volatile memory including a flash memory, a Read Only Memory (ROM), an Electrically Erasable Programmable ROM (EEPROM), a magnetic disc storage device, a Compact Disc (CD)-ROM, Digital Versatile Discs (DVDs) or other optical storage devices, and a magnetic cassette. Alternatively, the programs can be stored to a memory combining part or all of those recording media. A plurality of memories may be equipped.

The programs can be stored in an attachable storage device accessible via a communication network such as Internet, Intranet, Local Area Network (LAN), Wide LAN (WLAN), or Storage Area Network (SAN), or a communication network by combining these networks. The storage device can access the present electronic device through an external port. A separate storage device may access the present electronic device over a communication network.

As set forth above, the electronic device such as smart phone applies the different security levels to the security region and the non-security region and allows the user to set the security region and the non-security region, thus providing the adequate security management function for the user use pattern. Further, the electronic device allows the temporary change of the application security level so that the user can flexibly control the security according to the situation.

While the present disclosure has been shown and described with reference to various embodiments thereof, it will be understood by those skilled in the art that various changes in form and details may be made therein without departing from the scope of the present disclosure as defined by the appended claims.

## Claims

1. A method for operating an electronic device, the method comprising:
displaying a lock interface comprising a first region (210) having a first security level and a second region (220) having a second security level, wherein the first region (210) and the second region (220) each include at least one icon;
when a first input is detected (1201) on an icon (431) displayed (1001) in the first region (210):
displaying (1203) an interface for releasing a lock of the electronic device;
when the lock is released, executing (1207) an application corresponding to the icon (431) displayed in the first region (210); and
when the application corresponding to the icon (431) displayed in the first region (210) is exited, displaying (1211) a main menu;
when a second input is detected (1101) on an icon (330) displayed in the second region (220);
executing (1103) an application corresponding to the icon (330) displayed in the second region (220); and
when the application corresponding to the icon (330) displayed in second region (220) is exited, displaying (1107) the lock interface comprising the first region (210) and the second region (220); and
when a third input is detected on a portion of the first region (210) where no icon is displayed, displaying the interface for releasing a lock of the electronic device, and when the lock is released, displaying the main menu through which applications having either security level can be executed without requiring lock release.

2. The method of claim 1, wherein the lock interface comprising the first region (210) and the second region (220) is displayed when a screen (1533, 1633) of the electronic device is turned on.

3. The method of claim 1, further comprising:
when an input for moving the icon (431) displayed in the first region (210) to the second region (220) is detected, displaying the interface for releasing a lock of the electronic device;
when the lock is released, moving the icon (431) displayed in the first region (210) to the second region (220); and
when an input is detected on the icon moved to the second region (220), executing (1103) the application.

4. The method of claim 1, further comprising:
when an input for moving the icon (330) displayed in the second region (220) to the first region (210) is detected, moving the icon (330) displayed in the second region (220) to the first region (210);
when an input is detected on the icon (330) moved to the first region (210), displaying (1203) the interface for releasing the lock; and
when the lock is released, executing the application corresponding to the icon (330) moved to the first region (210).

5. The method of claim 4, further comprising:
when at least one of conditions that the application corresponding to the icon (431) displayed in the first region (201) is executed one time and then terminated, that a preset time is passed after the icon (431) is moved, and that the electronic device determines to manage a security level of the application corresponding to the icon (431) as the first security level according to an analysis result of the electronic device status or an the ongoing application is satisfied, moving the icon (431) moved to the second region (220), back to the first region (210).

6. The method of claim 1, wherein a division of the first region (210) and the second region (220) is determined based on at least one of a previous setup and a user's touch screen use pattern analysis result.

7. An electronic device comprising:
a display (1533, 1633);
a memory (1510); and
at least one processor (1522, 1622) configured to:
control the display (1533, 1633) to display a lock interface comprising a first region (210) having a first security level and a second region (220) having a second security level, wherein the first region (210) and the second region (220) each include at least one icon;
when a first input is detected (1201) on an icon (431) displayed (1001) in the first region (210):
control the display (1522, 1622) to display (1203) an interface for releasing a lock of the electronic device;
when the lock is released, execute (1207) an application corresponding to the icon (431) displayed in the first region (210); and
when the application corresponding to the icon (431) displayed in the first region (210) is exited, control the display (1522, 1622) to display (1211) a main menu;
when a second input is detected (1101) on an icon (330) displayed in the second region (220);
execute (1103) an application corresponding to the icon (330) displayed in the second region (210); and
when the application corresponding to the icon (330) displayed in second region (220) is exited, control the display (1522, 1622) to display (1107) the lock interface comprising the first region (210) and the second region (220); and
when a third input is detected on a portion of the first region (210) where no icon is displayed, control the display (1533, 1633) to display the interface for releasing a lock of the electronic device, and when the lock is released, control the display (1533, 1633) to display the main menu through which applications having either security level can be executed without requiring lock release.

8. The electronic device of claim 7, wherein the electronic device is further configured to implement the method of any one of claims 2 to 6.

## Patentansprüche

1. Verfahren zum Betreiben einer elektronischen Vorrichtung, wobei das Verfahren Folgendes umfasst:
Anzeigen einer Verriegelungsschnittstelle, die einen ersten Bereich (210) mit einer ersten Sicherheitsstufe und einen zweiten Bereich (220) mit einer zweiten Sicherheitsstufe umfasst, wobei der erste Bereich (210) und der zweite Bereich (220) jeweils mindestens ein Symbol beinhalten;
wenn eine erste Eingabe auf einem in dem ersten Bereich (210) angezeigten (1001) Symbol (431) erfasst (1201) wird:
Anzeigen (1203) einer Schnittstelle zum Freigeben einer Verriegelung der elektronischen Vorrichtung;
wenn die Verriegelung freigegeben ist, Ausführen (1207) einer Anwendung, die dem in dem ersten Bereich (210) angezeigten Symbol (431) entspricht; und
wenn die Anwendung, die dem in dem ersten Bereich (210) angezeigten Symbol (431) entspricht, beendet wird, Anzeigen (1211) eines Hauptmenüs;
wenn eine zweite Eingabe auf einem in dem zweiten Bereich (220) angezeigten Symbol (330) erfasst (1101) wird;
Ausführen (1103) einer Anwendung, die dem in dem zweiten Bereich (220) angezeigten Symbol (330) entspricht; und
wenn die Anwendung, die dem in dem zweiten Bereich (220) angezeigten Symbol (330) entspricht, beendet wird, Anzeigen (1107) der Verriegelungsschnittstelle, die den ersten Bereich (210) und den zweiten Bereich (220) umfasst; und
wenn eine dritte Eingabe auf einem Abschnitt des ersten Bereichs (210) erfasst wird, auf dem kein Symbol angezeigt wird, Anzeigen der Schnittstelle zum Freigeben einer Verriegelung der elektronischen Vorrichtung, und wenn die Verriegelung freigegeben ist, Anzeigen des
Hauptmenüs, über das Anwendungen, die eine der beiden Sicherheitsstufen aufweisen, ausgeführt werden können, ohne eine Verriegelungsfreigabe zu erfordern.

2. Verfahren nach Anspruch 1, wobei die Verriegelungsschnittstelle, die den ersten Bereich (210) und den zweiten Bereich (220) umfasst, angezeigt wird, wenn ein Bildschirm (1533, 1633) der elektronischen Vorrichtung eingeschaltet ist.

3. Verfahren nach Anspruch 1, das ferner Folgendes umfasst:
wenn eine Eingabe zum Bewegen des in dem ersten Bereich (210) angezeigten Symbols (431) zu dem zweiten Bereich (220), erfasst wird, Anzeigen der Schnittstelle zum Freigeben einer Verriegelung der elektronischen Vorrichtung;
wenn die Verriegelung freigegeben ist, Bewegen des in dem ersten Bereich (210) angezeigten Symbols (431) zu dem zweiten Bereich (220); und
wenn eine Eingabe auf dem zu dem zweiten Bereich (220) bewegten Symbol erfasst wird, Ausführen (1103) der Anwendung.

4. Verfahren nach Anspruch 1, das ferner Folgendes umfasst:
wenn eine Eingabe zum Bewegen des in dem zweiten Bereich (220) angezeigten Symbols (330) zu dem ersten Bereich (210) erfasst wird, Bewegen des in dem zweiten Bereich (220) angezeigten Symbols (330) zu dem ersten Bereich (210);
wenn eine Eingabe auf dem zu dem ersten Bereich (210) bewegten Symbol (330) erfasst wird, Anzeigen (1203) der Schnittstelle zum Freigeben der Verriegelung; und
wenn die Verriegelung freigegeben ist, Ausführen der Anwendung, die dem zu dem ersten Bereich (210) bewegten Symbol (330) entspricht.

5. Verfahren nach Anspruch 4, das ferner Folgendes umfasst:
wenn mindestens eine der Bedingungen, dass die Anwendung, die dem in dem ersten Bereich (201) angezeigten Symbol (431) entspricht, einmal ausgeführt und dann beendet wird, dass eine voreingestellte Zeit verstreicht, nachdem das Symbol (431) bewegt wurde, und dass die elektronische Vorrichtung das Verwalten einer Sicherheitsstufe der Anwendung bestimmt, die dem Symbol (431) als die erste Sicherheitsstufe gemäß einem Analyseergebnis des Status der elektronischen Vorrichtung oder einer laufende Anwendung entspricht, erfüllt ist, Bewegen des zu dem zweiten Bereich (220) bewegten Symbols (431) zurück zu dem ersten Bereich (210).

6. Verfahren nach Anspruch 1, wobei eine Aufteilung des ersten Bereichs (210) und des zweiten Bereichs (220) basierend auf mindestens einem von einer vorherigen Einstellung und einem Analyseergebnis eines Bildschirmbenutzungsmusters eines Benutzers.

7. Elektronische Vorrichtung, die Folgendes umfasst:
eine Anzeige (1533, 1633);
einen Speicher (1510); und
mindestens einen Prozessor (1522, 1622), der zu Folgendem konfiguriert ist:
Steuern der Anzeige (1533, 1633), um eine Verriegelungsschnittstelle anzuzeigen, die einen ersten Bereich (210) mit einer ersten Sicherheitsstufe und einen zweiten Bereich (220) mit einer zweiten Sicherheitsstufe umfasst, wobei der erste Bereich (210) und der zweiten Bereich (220) jeweils mindestens ein Symbol beinhalten;
wenn eine erste Eingabe auf einem in dem ersten Bereich (210) angezeigten (1001) Symbol (431) erfasst (1201) wird:
Steuern der Anzeige (1522, 1622), um eine Schnittstelle zum Freigeben einer Verriegelung der elektronischen Vorrichtung anzuzeigen (1203);
wenn die Verriegelung freigegeben ist, Ausführen (1207) einer Anwendung, die dem in dem ersten Bereich (210) angezeigten Symbol (431) entspricht; und
wenn die Anwendung, die dem in dem ersten Bereich (210) angezeigten Symbol (431) entspricht, beendet wird, Steuern der Anzeige (1522, 1622), um ein Hauptmenü anzuzeigen (1211);
wenn eine zweite Eingabe auf einem in dem zweiten Bereich (220) angezeigten Symbol (330) erfasst (1101) wird;
Ausführen (1103) einer Anwendung, die dem in dem zweiten Bereich (210) angezeigten Symbol (330) entspricht; und
wenn die Anwendung, die dem in dem zweiten Bereich (220) angezeigten Symbol (330) entspricht, beendet wird, Steuern der Anzeige (1522, 1622), um die Verriegelungsschnittstelle, die den ersten Bereich (210) und den zweiten Bereich (220) umfasst, anzuzeigen (1107); und
wenn eine dritte Eingabe auf einem Abschnitt des ersten Bereichs (210) erfasst wird, auf dem kein Symbol angezeigt wird, Steuern der Anzeige (1533, 1633), um die Schnittstelle zum Freigeben einer Verriegelung der elektronischen Vorrichtung anzuzeigen und wenn die Verriegelung freigegeben ist, Steuern der Anzeige (1533, 1633), um das Hauptmenü anzuzeigen, über das Anwendungen, die eine der beiden Sicherheitsstufen aufweisen, ausgeführt werden können, ohne eine Verriegelungsfreigabe zu erfordern.

8. Elektronische Vorrichtung nach Anspruch 7, wobei die elektronische Vorrichtung ferner konfiguriert ist, um das Verfahren nach einem der Ansprüche 2 bis 6 durchzuführen.

## Revendications

1. Procédé d'utilisation d'un dispositif électronique, le procédé comprenant : l'affichage d'une interface de verrou comprenant une première zone (210) présentant un premier niveau de sécurité et une deuxième zone (220) présentant un deuxième niveau de sécurité, dans lequel la première zone (210) et la deuxième zone (220) incluent chacune au moins une icône ;
lorsqu'une première entrée est détectée (1201) sur une icône (431) affichée (1001) dans la première zone (210) :
l'affichage (1203) d'une interface destinée à libérer un verrou du dispositif électronique ; lorsque le verrou est libéré, l'exécution (1207) d'une application correspondant à l'icône (431) affichée dans la première zone (210) ; et
lorsque l'application correspondant à l'icône (431) affichée dans la première zone (210) est quittée, l'affichage (1211) d'un menu principal ;
lorsqu'une deuxième entrée est détectée (1101) sur une icône (330) affichée dans la deuxième zone (220) ;
l'exécution (1103) d'une application correspondant à l'icône (330) affichée dans la deuxième zone (220) ; et
lorsque l'application correspondant à l'icône (330) affichée dans la deuxième zone (220) est quittée, l'affichage (1107) de l'interface de verrou comprenant la première zone (210) et la deuxième zone (220) ; et
lorsqu'une troisième entrée est détectée sur une partie de la première zone (210) où aucune icône n'est affichée, l'affichage de l'interface destinée à libérer un verrou du dispositif électronique, et lorsque le verrou est libéré, l'affichage du menu principal par le biais duquel des applications présentant l'un ou l'autre niveau de sécurité peuvent être exécutées sans exiger de libération de verrou.

2. Procédé selon la revendication 1, dans lequel l'interface de verrou comprenant la première zone (210) et la deuxième zone (220) est affichée lorsqu'un écran (1533, 1633) du dispositif électronique est activé.

3. Procédé selon la revendication 1, comprenant en outre :
lorsqu'une entrée destinée à déplacer l'icône (431) affichée dans la première zone (210) vers la deuxième zone (220) est détectée, l'affichage de l'interface destinée à libérer un verrou du dispositif électronique ;
lorsque le verrou est libéré, le déplacement de l'icône (431) affiché dans la première zone (210) vers la deuxième zone (220) ; et
lorsqu'une entrée est détectée sur l'icône déplacée vers la deuxième zone (220), l'exécution (1103) de l'application.

4. Procédé selon la revendication 1, comprenant en outre :
lorsqu'une entrée destinée à déplacer l'icône (330) affichée dans la deuxième zone (220) vers la première zone (210) est détectée, le déplacement de l'icône (330) affichée dans la deuxième zone (220) vers la première zone (210) ;
lorsqu'une entrée est détectée sur l'icône (330) déplacée vers la première zone (210), l'affichage (1203) de l'interface destinée à libérer le verrou ; et
lorsque le verrou est libéré, l'exécution de l'application correspondant à l'icône (330) déplacée vers la première zone (210).

5. Procédé selon la revendication 4, comprenant en outre :
lorsque au moins l'une des conditions suivantes est remplie : l'application correspondant à l'icône (431) affichée dans la première zone (201) est exécutée une fois puis terminée, un temps prédéfini s'est écoulé après que l'icône (431) a été déplacée, et le dispositif électronique détermine de gérer un niveau de sécurité de l'application correspondant à l'icône (431) comme le premier niveau de sécurité d'après un résultat d'analyse du statut du dispositif électronique ou d'une application en cours ; le déplacement de l'icône (431) déplacée vers la deuxième zone (220), pour la ramener vers la première zone (210).

6. Procédé selon la revendication 1, dans lequel une division de la première zone (210) et de la deuxième zone (220) est déterminée sur la base d'au moins l'une d'une configuration précédente et d'un résultat d'analyse de schéma d'utilisation d'écran tactile de l'utilisateur.

7. Dispositif électronique comprenant :
un affichage (1533, 1633) ;
une mémoire (1510) ; et
au moins un processeur (1522, 1622) configuré pour :
commander à l'affichage (1533, 1633) d'afficher une interface de verrou comprenant une première zone (210) présentant un premier niveau de sécurité et une deuxième zone (220) présentant un deuxième niveau de sécurité, dans lequel la première zone (210) et la deuxième zone (220) incluent chacune au moins une icône ;
lorsqu'une première entrée est détectée (1201) sur une icône (431) affichée (1001) dans la première zone (210) :
commander à l'affichage (1522, 1622) d'afficher (1203) une interface destinée à libérer un verrou du dispositif électronique ;
lorsque le verrou est libéré, exécuter (1207) une application correspondant à l'icône (431) affichée dans la première zone (210) ; et
lorsque l'application correspondant à l'icône (431) affichée dans la première zone (210) est quittée, commander à l'affichage (1522, 1622) d'afficher (1211) un menu principal ;
lorsqu'une deuxième entrée est détectée (1101) sur une icône (330) affichée dans la deuxième zone (220) :
exécuter (1103) une application correspondant à l'icône (330) affichée dans la deuxième zone (210) ; et
lorsque l'application correspondant à l'icône (330) affichée dans la deuxième zone (220) est quittée, commander à l'affichage (1522, 1622) d'afficher (1107) l'interface de verrou comprenant la première zone (210) et la deuxième zone (220) ; et lorsqu'une troisième entrée est détectée sur une partie de la première zone (210) où aucune icône n'est affichée, commander à l'affichage (1533, 1633) d'afficher l'interface destinée à libérer un verrou du dispositif électronique, et lorsque le verrou est libéré, commander à l'affichage (1533, 1633) d'afficher le menu principal par le biais duquel des applications présentant l'un ou l'autre niveau de sécurité peuvent être exécutées sans exiger de libération de verrou.

8. Dispositif électronique selon la revendication 7, dans lequel le dipositif électronique est en outre configuré pour mettre en oeuvre le procédé selon l'une quelconque des revendications 2 à 6.
